# EUROPÄISCHE PATENTSCHRIFT

(11) **EP 2 838 750 B1**
(45) Veröffentlichungstag und Bekanntmachung des Hinweises auf die Patenterteilung: **06.07.2016**
(21) Anmeldenummer: 13718505.4
(22) Anmeldetag: 18.04.2013
(51) Int. Cl.: B60K 28/04, B60K 28/12, B60R 16/023, B60W 30/18, F02N 11/08, B60K 28/00

(54) **KRAFTWAGEN MIT AUTOMATISCH ABSCHALTENDER ANTRIEBSEINRICHTUNG BEI VERLASSEN DES KRAFTWAGENS SOWIE ENTSPRECHENDES BETRIEBSVERFAHREN FÜR DEN KRAFTWAGEN**
AUTOMOBILE VEHICLE AND METHOD FOR SHUTTING OFF A PROPULSION UNIT OF THE AUTOMOBILE VEHICLE WHEN THE DRIVER LEAVES THE VEHICLE
VÉHICULE AUTOMOBILE ET PROCÉDÉ POUR DÉCLENCHER LE MÉCANISME D'ENTRAÎNEMENT DU VÉHICULE QUAND LE CONDUCTEUR QUITTE LE VÉHICULE

(30) Priorität: 19.04.2012 DE 102012007836
(43) Veröffentlichungstag der Anmeldung: 25.02.2015
(73) Patentinhaber: Audi AG, 85045 Ingolstadt (DE)
(72) Erfinder: GEISSENHÖNER, Martin, 85055 Ingolstadt (DE)
(74) Vertreter: Brandt, Kai
(86) Internationale Anmeldenummer: PCT/EP2013/001154
(87) Internationale Veröffentlichungsnummer: WO 2013/156157

(56) Entgegenhaltungen:
- EP-A2- 1 820 700
- WO-A1-2011/070389
- DE-A1- 2 447 579
- DE-A1-102010 052 547
- FR-A1- 2 928 329

## Beschreibung

Die Erfindung betrifft ein Verfahren zum Abschalten einer Antriebseinrichtung eines Kraftwagens durch eine Steuereinrichtung in dem Fall, dass ein Fahrer des Kraftwagens diesen bei eingeschalteter Antriebseinrichtung verlässt. Zu der Erfindung gehört auch ein Kraftwagen mit einer Antriebseinrichtung, einer Steuereinrichtung zum Abschalten der Antriebseinrichtung, einer Erkennungseinrichtung zum Überwachen einer Anwesenheit einer Person in dem Kraftwagen und einer Schalteinrichtung zum Abschalten zumindest eines elektrischen Verbrauchers des Kraftwagens. Unter Antriebseinrichtung ist im Zusammenhang mit der Erfindung insbesondere eine Brennkraftmaschine, ein Elektromotor oder auch ein Hybridantrieb zu verstehen.

Verlässt ein Fahrer seinen Kraftwagen, so hat dies an sich in der Regel nicht zur Folge, dass hierdurch ein Betriebszustand des Fahrzeugs automatisch geändert wird. Das Fahrzeug bleibt in dem Zustand, in dem der Fahrer es verlassen hat. Läuft hierbei ein Verbrennungsmotor weiter, so produziert das Fahrzeug schädliche Abgase. Für eine Reduzierung des Kraftstoffverbrauchs bei kurzen Haltephasen, wie beispielsweise bei einem Halt an einer auf Rot geschalteten Ampel, kann für solche Fälle in einem Kraftwagen ein Start-Stop-System bereitgestellt sein, dass bei Erkennen einer Haltephase einen Verbrennungsmotor abstellt. Da hier der Fahrer für gewöhnlich den Kraftwagen nicht verlässt, werden elektrische Verbraucher des Kraftwagens weiterbetrieben, also etwa ein Radio oder eine Klimaanlage. In vergleichbarer Weise wird auch ein Verbrennungsmotor eines Hybridantriebs immer dann ausgeschaltet, wenn er nicht gebraucht wird, also auch zu Beginn einer Haltephase.

Hält ein Fahrer nun den Kraftwagen an und steigt er dann aus diesem aus, so wird auch in diesem Fall der Verbrennungsmotor von einem Start-Stop-System abgeschaltet. Für den Fahrer erscheint es dann, als sei der Kraftwagen bereits vollständig abgeschaltet und er könne sich für unbestimmte Zeit von dem Kraftwagen entfernen. Insbesondere wenn hierbei aber weiterhin elektrische Verbraucher mit einem verhältnismäßig großen Leistungsbedarf weiterbetrieben werden (z.B. eine Klimaanlage), so besteht hierbei die Gefahr, dass das Fahrzeug sich nicht wieder starten lässt. Für den Fall, dass es sich bei dem Kraftwagen um ein elektrisch angetriebenes Fahrzeug handelt, tritt dieser Fall besonders schnell ein.

Bei heutigen Kraftwagen ist das Risiko aus zwei weiteren Gründen besonders groß, dass ein Fahrer vergisst, seinen Kraftwagen vollständig abzuschalten. Zum einen wird ein Kraftwagen in vielen Fällen nicht mehr mit einem Zündschlüssel gestartet, der in ein Zündschloss gesteckt und umgedreht werden muss. Stattdessen ist als Starteinrichtung zum Starten des Kraftwagens oft nur noch ein Knopf zu drücken. Beim Aussteigen aus einem Kraftwagen kann es daher vorkommen, dass der Fahrer vergisst, den Knopf noch einmal zu drücken, um den Kraftwagen wieder vollständig abzuschalten. Zum anderen sind heutige Antriebseinrichtungen besonders geräuscharm. Insbesondere Elektromotoren erzeugen im Stillstand kein oder nur ein kaum hörbares Geräusch. Verlässt ein Fahrer den Kraftwagen, so wird er also nicht durch Geräusche des Kraftwagens daran erinnert, die Antriebseinrichtung abzuschalten. Wie bereits ausgeführt, kann diese Gefahr auch bei einem Kraftwagen mit Verbrennungsmotor gegeben sein, wenn dieser ein Start-Stop-System oder einen Hybridantrieb aufweist.

Um hier den Bedienkomfort für einen Fahrer zu verbessern, kann in einem Kraftwagen eine Erkennungseinrichtung bereitgestellt sein, welche überwacht, ob der Fahrer den Kraftwagen verlässt. In einem solchen Fall werden dann sofort, wenn der Fahrer den Kraftwagen nach einer Fahrt verlässt, sowohl der Antriebsmotor also auch die elektrischen Verbraucher des Kraftwagens abgeschaltet. Dies steigert die Wirtschaftlichkeit des Betriebs des Kraftwagens und verringert zugleich die Liegenbleibgefahr aufgrund einer entladenen Batterie. Durch das Signal der Erkennungseinrichtung wird zwischen der Präsenz und der Abwesenheit des Fahrers unterschieden. Die Erkennungseinrichtung weist deshalb gegenüber einem Start-Stop-System den Vorteil auf, dass ausdrücklich erkannt wird, ob der Fahrer den Kraftwagen verlässt oder verlassen hat.

Eine solche Erkennungseinrichtung ist aber nicht nur von Vorteil. Steigt ein Fahrer beispielsweise aus seinem Kraftwagen, während sich noch andere Passagiere im Kraftwagen befinden, so wird durch das automatische Abschalten des Kraftwagens z. B. auch die Telefonanlage abgeschaltet. Telefoniert gerade eine Person in dem Kraftwagen, so ist damit die Telefonverbindung unterbrochen. Die WO 2011/070389A1 offenbart ein Verfahren nach dem Oberbegriff des Patentanspruchs 1 und einen Kraftwagen nach dem Oberbegriff des Patentanspruchs 9.

Eine Aufgabe der vorliegenden Erfindung besteht darin, einen Kraftwagen wirtschaftlich und ausfallsicher zu betreiben, ohne dass es hierdurch zu Komforteinbußen für die Insassen kommt.

Die Aufgabe wird durch ein Verfahren gemäß Patentanspruch 1 sowie einen Kraftwagen gemäß Patentanspruch 9 gelöst. Vorteilhafte Weiterbildungen der Erfindung sind durch die Unteransprüche gegeben.

Bei dem erfindungsgemäßen Verfahren nach Patentanspruch 1 wird durch eine Erkennungseinrichtung überwacht, ob der Fahrer den Kraftwagen bei eingeschalteter Antriebseinrichtung verlässt oder verlassen hat, und dann gegebenenfalls die Antriebseinrichtung abgeschaltet. Die wird durch eine Steuereinrichtung bewirkt, die beispielweise Bestandteil eines Motorsteuergeräts sein kann. Nach dem Abschalten der Antriebseinrichtung wird zumindest ein elektrischer Verbraucher weiter betrieben, wenn er zum Zeitpunkt des Abschaltens noch in Betrieb war. Ein solcher Verbraucher wird erst abgeschaltet, falls der Verbraucher ein zusätzliches Abschaltsignal empfängt. Weitere Merkmale des erfindungsgemäßen Verfahrens sind in Patentanspruch 1 genannt.

Das erfindungsgemäße Verfahren weist den Vorteil auf, dass nun gezielt auf die Belange weiterer, im Kraftwagen verbleibender Passagiere Rücksicht genommen werden kann. Steigt der Fahrer aus dem Kraftwagen, so wird nur die Antriebseinrichtung beim Aussteigen oder unmittelbar danach abgeschaltet. Passagiere können weiterhin Komfortverbraucher nutzen, also Verbraucher, durch welche eine von den Passagieren nutzbare Funktionalität in dem Kraftwagen bereitgestellt wird.

Der erfindungsgemäße Kraftwagen nach Patentanspruch 9 ermöglicht die Umsetzung des erfindungsgemäßen Verfahrens. Dazu weist der Kraftwagen neben der Antriebseinrichtung selbst und der erwähnten Steuereinrichtung zum Abschalten der Antriebseinrichtung noch eine Erkennungseinrichtung zum Überwachen einer Anwesenheit einer Person in dem Kraftwagen auf. Die Erkennungseinrichtung kann z.B. einen Gewichtsensor umfassen, der im Fahrersitz eingebaut ist. Die Steuereinrichtung schaltet die Antriebseinrichtung ab, falls die Erkennungseinrichtung signalisiert, dass der Fahrer den Kraftwagen verlässt oder verlassen hat. Eine elektrische Schalteinrichtung des Kraftwagens kann gezielt zumindest einen vorbestimmten elektrischen Verbraucher abschalten. Die Schalteinrichtung ist aber dazu ausgelegt, nach dem Abschalten der Antriebseinrichtung den zumindest einen vorbestimmten Verbraucher zunächst weiter zu betreiben, falls er zum Zeitpunkt des Abschaltens in Betrieb war, und ihn erst später abzuschalten, falls ein vorbestimmtes zusätzliches Abschaltkriterium erfüllt ist. Weitere Merkmale des erfindungsgemäßen Kraftwagens sind in Patentanspruch 9 genannt.

Bei dem Abschaltkriterium kann es sich insbesondere darum handeln, dass ein Signal von einem Steuergerät erzeugt wird, durch welches auch eine Schließanlage zum Verschließen einer Fahrzeugtür gesteuert wird. Mit anderen Worten ist das Abschaltkriterium erfüllt, wenn der Fahrer die Verriegelungseinrichtung des Kraftwagens aktiviert. Bei einem Verriegelungswunsch des Fahrers steht fest, dass auch die Komfortverbraucher in dem Kraftwagen nicht mehr benötigt werden und deshalb abgeschaltet werden können.

Die Nachlaufzeit für Komfortsysteme nach dem Abschalten der Antriebseinrichtung kann gemäß einer anderen Ausführungsform des erfindungsgemäßen Verfahrens beschränkt werden, indem beim Abschalten der Antriebseinrichtung ein Timer gestartet wird und ein Abschaltsignal für die noch in Betrieb befindlichen Verbraucher bei Ablauf des Timers erzeugt wird. Hierdurch ist in vorteilhafter Weise sichergestellt, dass der Stromverbrauch durch die Komfortverbraucher ein vorbestimmtes Maß nicht überschreitet.

Um eine noch genauere Kontrolle über die nach dem Abschalten der Antriebseinrichtung verbrauchte Energiemenge zu erhalten, sieht eine Ausführungsform des Verfahrens vor, beim Abschalten der Antriebseinrichtung eine Messeinrichtung zu starten, durch welche eine Menge der von dem zumindest einen weiter betriebenen Verbraucher verbrauchten Energie gemessen wird, und das Abschaltsignal bei Erreichen eines vorbestimmten Höchstwerts für die gemessene Energie zu erzeugen. Ein noch genauerer Überblick ergibt sich, wenn anstelle der von den Verbrauchern verbrauchten Energie direkt eine aus einem Energiespeicher des Kraftwagens, beispielsweise dessen elektrischen Akkumulator, entnommene elektrische Energie gemessen wird.

Besonders optimal in Bezug auf den Energieverbrauch ist es, wenn durch die Erkennungseinrichtung zusätzlich überwacht wird, ob nach dem Abschalten der Antriebseinrichtung überhaupt weitere Personen im Kraftwagen verblieben sind, und andernfalls, wenn also erkannt wird, dass der Kraftwagen leer ist, das Abschaltsignal sofort erzeugt wird.

Als eine besondere Steigerung des Komforts wird es von Passagieren empfunden, wenn nach dem Abschalten der Antriebseinrichtung zumindest einer der folgenden Komfortverbraucher weiter betrieben wird: ein Infotainmentsystem, eine Telefonanlage, eine WLAN-Kommunikationseinrichtung (WLAN - wireless local area network), eine Klimaanlage, eine Sitzheizung, eine Sitzlüftung, eine Sitzmassage, ein Gebläse einer Passagierraumlüftung.

Um hierbei trotz des gesteigerten Komforts zu vermeiden, dass der Energiespeicher des Kraftwagens nach dem Abschalten der Antriebseinrichtung unnötig belastet wird, kann auch vorgesehen sein, das Anschalten zumindest eines vorbestimmten elektrischen Verbrauchers zu blockieren, nachdem die Antriebseinrichtung abgeschaltet wurde. Mit anderen Worten werden nur bereits beim Abschalten im Betrieb befindliche Komfortverbraucher weiter betrieben, weitere lassen sich dagegen danach nicht hinzuschalten.

In Zusammenhang mit einer Telefonanlage und einer WLAN-Kommunikationseinrichtung sieht das erfindungsgemäße Verfahren vor, dass durch eine Kommunikationseinrichtung, also etwa ein GSM-Funkmodul (GSM - global system for mobile communications) oder ein UMTS-Funkmodul (UMTS-universal mobile telecommunications system), überprüft wird, ob während des Abschaltens der Antriebseinrichtung eine Telefon- bzw. eine Datenverbindung zu einem Kommunikationsnetz eines Mobilfunkanbicters besteht. Falls keine solche Verbindung erkannt wird, kann durch die Kommunikationseinrichtung ein Abschaltsignal an die Telefonanlage und/oder die WLAN-Kommunikationseinrichtung gesendet werden, oder allgemein an eine Datenverarbeitungsanlage. Dadurch wird zum einen sichergestellt, dass keine bestehenden Kommunikationsverbindungen unterbrochen werden. Zugleich ist vermieden, dass nach dem Abschalten der Antriebseinrichtung eine neue Verbindung aufgebaut wird, sodass dann erneut abgewartet werden müsste, bis auch diese Verbindung wieder von dem Benutzer beendet wird.

Anstelle einer Überprüfung der aktiven Telefon- oder Datenverbindungen kann auch vorgesehen sein, nur zu überprüfen, ob überhaupt zumindest eine Funknetzkopplung bereitsteht, d.h. ein so genanntes Bonding, bei welchem das Mobilfunkmodul am Kommunikationsnetz zwar angemeldet ist, aber keine aktive Telefon- oder Datenverbindung aufgebaut ist. Dann können Passagiere in dem Kraftwagen weiter angerufen werden.

In Zusammenhang mit der Frage, wie erkannt werden kann, ob der Fahrer den Kraftwagen verlässt oder verlassen hat, können im Zusammenhang mit der Erfindung viele unterschiedliche technische Ansätze zur Realisierung der Erkennungseinrichtung genutzt werden. Durch Bereitstellen entsprechender Sensoren kann etwa überprüft werden, ob sich eine Person auf dem Fahrersitz abgeschnallt hat oder die Fahrertür geöffnet hat, oder ob die Person mit ihrem Gewicht einen entsprechenden Schalter oder Sensor im Fahrersitz belastet. Auch die Signale von Sensoren, die auch in einem anderen Zusammenhang genutzt werden, wie beispielsweise diejenigen einer Alarmanlage, können genutzt werden. Alarmanlagen sind beispielsweise in der Lage, auch die Gegenwart einer Person im Umfeld des Kraftwagens zu erkennen.

Eine vorteilhafte Weiterbildung des erfindungsgemäßen Verfahrens sieht sogar vor, durch die Erkennungseinrichtung auch zu überwachen, ob wieder eine Person in einem vorbestimmten Überwachungsbereich anwesend ist, ob also der Fahrer oder eine andere Person wieder zum Kraftwagen zurückgekehrt ist. Hierzu können auch andere Sensoren verwendet werden, mit denen sich das Verlassen des Kraftwagens nicht erkennen lässt, wie beispielsweise Sensoren, durch welche das Betätigen des Lenkrads oder eines Pedals des Kraftwagens erkannt wird. Die Weiterbildung des Verfahrens sieht dabei zusätzlich vor, die Antriebseinrichtung durch die Steuereinrichtung wieder zu starten, falls durch die Erkennungseinrichtung die erneute Anwesenheit einer Person signalisiert wird. Hierdurch ergibt sich der Vorteil, dass der Fahrer für eine kurze Zeit aussteigen kann, um beispielsweise ein Garagentor zu öffnen oder Zigaretten einzukaufen, und dann in den Kraftwagen zurückkehren und weiterfahren kann, ohne dass er die automatisch abgeschaltete Antriebseinrichtung händisch neu starten muss. Indem hierbei aber die elektrischen Verbraucher nach dem Abschalten weiter betrieben werden, können Passagiere im Fahrgastraum verbleiben und die Verbraucher nutzen.

Zur Erfindung gehören auch Weiterbildungen des erfindungsgemäßen Kraftwagens, welche Merkmale aufweisen, die hier bereits in Zusammenhang mit den Weiterbildungen des erfindungsgemäßen Verfahrens beschrieben worden sind. Aus diesem Grund werden die entsprechenden Weiterbildungen des erfindungsgemäßen Kraftwagens hier nicht noch einmal erläutert.

Im Folgenden wird die Erfindung noch einmal genauer anhand eines konkreten Ausführungsbeispiels erläutert. Dazu zeigen:
- Fig. 1: eine schematische Darstellung einer Ausführungsform des erfindungsgemäßen Kraftwagens; und
- Fig. 2: ein Flussschaubild betreffend eine Ausführungsform des erfindungsgemäßen Verfahrens.

Bei dem im Folgenden erläuterten Beispiel stellen die beschriebenen Komponenten des Kraftwagens und die beschriebenen Schritte des Verfahrens jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

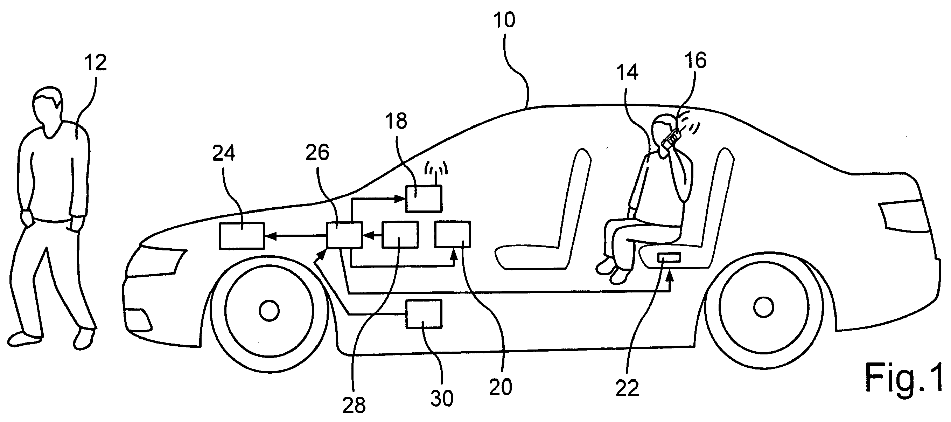

In Fig. 1 ist ein Kraftwagen 10 gezeigt, aus dem gerade ein Fahrer 12 ausgestiegen ist. Bei dem Kraftwagen 10 kann es sich beispielsweise um einen Personenkraftwagen handeln. In dem Kraftwagen 10 ist ein weiterer Passagier 14 verblieben, welcher gerade telefoniert und hierzu ein Telefon 16 verwendet, das mit einer Telefonanlage 18 des Kraftwagens 10 über Funk verbunden ist. Das Telefon 16 hat über die Telefonanlage 18 eine Kommunikationsverbindung mit einem (nicht weiter dargestellten) Kommunikationsnetz eines Mobilfunkanbieters aufgebaut. In dem Kraftwagen 10 laufen des Weiteren noch eine Klimaanlage 20 und eine Sitzheizung 22.

Ein Antriebsmotor 24 des Kraftwagens 10 wurde von einer Steuereinrichtung 26 des Kraftwagens 10 abgeschaltet, als der Fahrer 12 den Kraftwagen 10 verließ. Bei der Antriebseinrichtung 24 kann es sich um eine Brennkraftmaschine, einen Elektromotor oder auch einen Hybridantrieb handeln. Bei der Steuereinrichtung 26 kann es sich beispielsweise um ein Steuergerät handeln.

Die Abwesenheit des Fahrers 12 wurde durch eine Erkennungseinrichtung 28 erkannt, die daraufhin ein entsprechendes Signal an die Steuereinrichtung 26 gesendet hat. Die Erkennungseinrichtung 28 kann eine Vielzahl von Komponenten umfassen, die dazu geeignet sind, die Abwesenheit oder das Aussteigen des Fahrers 12 aus dem Kraftwagen 10 zu erkennen. Hierbei kann auch auf Einrichtungen zurückgegriffen werden, wie sie an sich in anderem Zusammenhang zum Überprüfen einer Präsenz einer Person bereits aus dem Stand der Technik bekannt sind.

Die Steuereinrichtung 26 hat zwar den Antriebsmotor 24 ausgeschaltet. Die Telefonanlage 18, die Klimaanlage 20 und die Sitzheizung 22 werden aber auch nach dem Abschalten des Antriebsmotors 24 weiter betrieben. Damit bleibt die Telefonverbindung des Telefons 16 zum Mobilfunknetz aufrechterhalten und der Passagier 14 sitzt auch weiterhin in einem klimatisierten Fahrgastinnenraum und auf einem beheizten Sitz. Erst wenn auch der Passagier 14 aus dem Kraftwagen 10 aussteigt und der Fahrer 12 beispielsweise die Fahrzeugtüren mit einem entsprechenden Schlüssel oder mit einer Fernbedienung abschließt, werden durch die Steuereinrichtung 26 auch die Telefonanlage 18, die Klimaanlage 20 und die Sitzheizung 22 abgeschaltet.

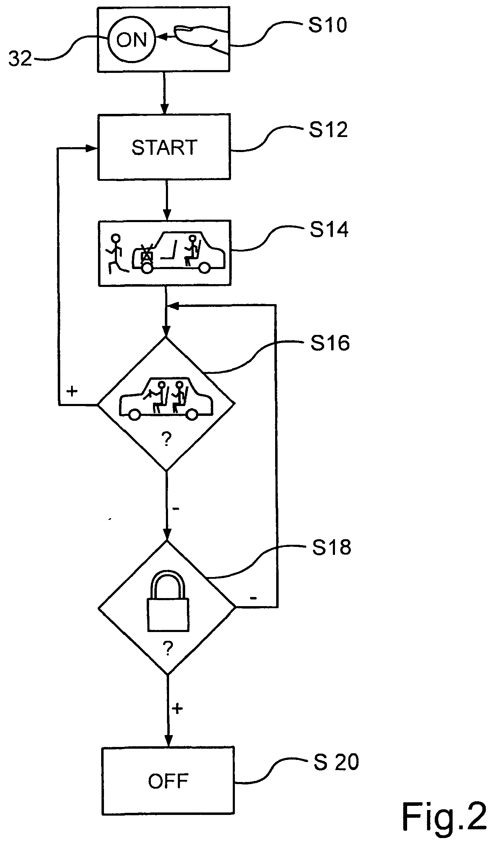

Im Folgenden ist anhand von Fig. 1 und Fig. 2 noch einmal das Verfahren erläutert, nach welchem in dem Kraftwagen 10 der Antriebsmotor 24 und die Komfortverbraucher, d.h. die Telefonanlage 18, die Klimaanlage 20 und die Sitzheizung 22, geschaltet werden.

Nachdem der Fahrer 12 in den Kraftwagen 10 eingestiegen war, hat er durch Betätigen einer Starteinrichtung den Antriebsmotor 24 gestartet. Beispielsweise hat er in einem Schritt S10 einen Startknopf 30 gedrückt, wodurch die Steuereinrichtung 26 veranlasst wurde, die Antriebseinrichtung 24 in einem Schritt S12 zu starten und auch das Aktivieren der Komfortverbraucher 18, 20, 22 durch einen Benutzer zu ermöglichen.

Nachdem nun der Fahrer 12, wie in Fig. 1 dargestellt, den Kraftwagen 10 verlassen hat, wird dies durch die Erkennungseinrichtung 28 erkannt und durch die Steuereinrichtung 26 in einem Schritt S14 zunächst nur der Antriebsmotor 24, nicht aber die Komfortverbraucher 18, 20, 22, abgeschaltet. In einem Schritt S16 wird durch die Erkennungseinrichtung 28 überwacht, ob der Fahrer 12 wieder in den Kraftwagen zurückgekehrt ist. Ist dies der Fall (+), so wird die Antriebseinrichtung 24 wieder automatisch durch die Steuereinrichtung 26 gestartet (Schritt S12), nachdem die Steuereinrichtung 26 das Signal über die Rückkehr des Fahrers 12 von der Erkennungseinrichtung 28 erhalten hat.

Andernfalls, wenn die Erkennungseinrichtung 28 weiterhin die Abwesenheit des Fahrers 12 signalisiert, wird in einem Schritt S18 z. B. überprüft, ob eine Schließanlage 30 beispielsweise von einer Fernbedienung des Fahrers 12 einen Verriegelungswunsch empfanden hat, indem der Fahrer 12 einen entsprechenden Knopf der Fernbedienung gedrückt hat. Ist dies nicht der Fall, wird die Prüfung auf Rückkehr des Fahrers 12 wiederholt (Rückkehr zum Schritt S16). Soll dagegen durch die Verriegelungseinrichtung 30 der Kraftwagen 10 verschlossen werden, so wird dies von der Verriegelungseinrichtung 30 auch der Steuereinrichtung 26 signalisiert, welche daraufhin ein Abschaltsignal an die noch im Betrieb befindlichen Komfortverbraucher 18, 20, 22 sendet, die daraufhin in einem Schritt S20 ebenfalls abgeschaltet werden (OFF). Die Steuereinrichtung 26 ist hier also zugleich eine Schalteinrichtung zum Abschalten der Komfortverbraucher 18, 20, 22.

Das beschriebene Konzept ist für alle Antriebstypen einsetzbar (Verbrennungsmotor, Hybrid-, und Elektrofahrzeug). Durch das Abschalten des Antriebsmotors nach dem Aussteigen des Fahrers 12 wird ein Energieverbrauch des Kraftwagens und damit das Risiko eines Liegenbleibens verringert. Außerdem wird das Fahrzeug in einen sicheren Zustand versetzt, sodass beispielsweise im Kraftwagen 10 verbliebene Kinder den Kraftwagen 10 nicht von sich aus in Bewegung setzen können. Indem nach dem Abschalten der Zündung bestimmte Komfortsysteme für eine Nachlaufzeit weiter aktiv bleiben, wird den im Fahrzeug verbliebenen Passagieren weiterhin ein hoher Komfort geboten, und auch eine aktive Telefonkopplung wird nicht verloren. Über einen Verriegelungswunsch durch den Fahrer kann der Komfortnachlauf gezielt beendet werden, da nun mit hoher Wahrscheinlichkeit niemand mehr die Komfortsysteme im Kraftwagen 10 benutzt.

## Patentansprüche

1. Verfahren betreffend das Abschalten einer aus einer Brennkraftmaschine und/oder einem Elektromotor gebildeten Antriebseinrichtung (24) eines Kraftwagens (10) durch eine Steuereinrichtung (26) in dem Fall, dass ein Fahrer (12) des Kraftwagens (10) diesen bei eingeschalteter Antriebseinrichtung (24) verlässt, wobei durch eine Erkennungseinrichtung (28) überwacht wird, ob der Fahrer (12) den Kraftwagen (10) verlässt oder verlassen hat, und, falls die Erkennungseinrichtung (28) signalisiert, dass der Fahrer (12) den Kraftwagen (10) verlässt oder verlassen hat, die Antriebseinrichtung (24) durch die Steuereinrichtung (26) abgeschaltet wird, und nach dem Abschalten (S14) zumindest ein vorbestimmter elektrischer Verbraucher (18, 20, 22), der zum Zeitpunkt des Abschaltens in Betrieb war, weiterbetrieben und erst abgeschaltet (S20) wird, falls der Verbraucher (18, 20, 22) ein zusätzliches Abschaltsignal empfängt,
**dadurch gekennzeichnet, dass** der zumindest eine vorbestimmte Verbraucher eine Telefonanlage (18) ist und dass
durch eine Kommunikationseinrichtung überprüft wird, ob während des Abschaltens der Antriebseinrichtung (24) eine Telefonverbindung zu einem Kommunikationsnetz eines Mobilfunkanbieters besteht, und die Kommunikationseinrichtung ein Abschaltsignal an die Telefonanlage (18) sendet, falls keine solche Verbindung erkannt wird.

2. Verfahren nach Anspruch 1, wobei zumindest ein Komfortverbraucher (18, 20, 22) weiterbetrieben wird, durch welchen eine auch von Passagieren (14) nutzbare Funktionalität in dem Kraftwagen (10) bereitgestellt wird.

3. Verfahren nach Anspruch 1 oder 2, wobei das Abschaltsignal von einem Steuergerät erzeugt wird, durch welches auch eine Schließanlage (30) zum Verschließen einer Fahrzeugtür gesteuert wird.

4. Verfahren nach einem der vorhergehenden Ansprüche, wobei beim Abschalten der Antriebseinrichtung (24) ein Timer gestartet wird und das Abschaltsignal bei Ablauf des Timers erzeugt wird.

5. Verfahren nach einem der vorhergehenden Ansprüche, wobei beim Abschalten der Antriebseinrichtung (24) eine Messeinrichtung gestartet wird, durch welche eine Menge einer von dem zumindest einen weiterbetriebenen Verbraucher (18, 20, 22) verbrauchten oder aus einem Energiespeicher des Kraftwagens (10) entnommenen elektrischen Energie gemessen wird und das Abschaltsignal bei Erreichen eines vorbestimmten Höchstwerts für die gemessene Energie erzeugt wird.

6. Verfahren nach einem der vorhergehenden Ansprüche, wobei durch die Erkennungseinrichtung (28) überwacht wird, ob nach dem Abschalten (S14) der Antriebseinrichtung (24) weitere Personen (14) im Kraftwagen (10) verblieben sind, und andernfalls das Abschaltsignal erzeugt wird.

7. Verfahren nach einem der vorhergehenden Ansprüche, **gekennzeichnet durch** die weiteren Schritte:
- **durch** die Erkennungseinrichtung (28) Überwachen, ob wieder eine Person (12) in einem vorbestimmten Überwachungsbereich anwesend ist (S16);
- Wiederstarten (S12) der Antriebseinrichtung (24) **durch** die Steuereinrichtung (26) bei Signalisieren einer Anwesenheit **durch** die Erkennungseinrichtung (28).

8. Verfahren nach einem der vorhergehenden Ansprüche, wobei nach dem Abschalten (S14) der Antriebseinrichtung (24) das Anschalten zumindest eines vorbestimmten elektrischen Verbrauchers blockiert wird.

9. Kraftwagen (10) mit einer aus einer Brennkraftmaschine und/oder einem Elektromotor gebildeten Antriebseinrichtung (24), einer Steuereinrichtung (26) zum Abschalten der Antriebseinrichtung (24), einer Erkennungseinrichtung (28) zum Überwachen einer Anwesenheit einer Person (12) in dem Kraftwagen (10) und einer Schalteinrichtung (26) zum Abschalten zumindest eines vorbestimmten elektrischen Verbrauchers (18, 20, 22), wobei die Steuereinrichtung (26) dazu ausgelegt ist, die Antriebseinrichtung (24) abzuschalten, falls die Erkennungseinrichtung (28) signalisiert, dass die Person (12) den Kraftwagen (10) verlässt oder verlassen hat, und wobei die Schalteinrichtung (26) dazu ausgelegt ist, nach dem Abschalten der Antriebseinrichtung (24) den zumindest einen vorbestimmten Verbraucher (18, 20, 22) zunächst weiterzubetreiben, falls er zum Zeitpunkt des Abschaltens in Betrieb war, und ihn erst abzuschalten, falls ein vorbestimmtes zusätzliches Abschaltkriterium erfüllt ist, **dadurch gekennzeichnet, dass** der zumindest eine vorbestimmte Verbraucher eine Telefonanlage (18) und/oder eine WLAN-kommunikationseinrichtung ist und dass
die Schalteinrichtung (26) dazu ausgelegt ist, die Telefonanlage (16, 18) und/oder die WLAN-Kommunikationseinrichtung nach dem Abschalten der Antriebseinrichtung (24) zunächst weiterzubetreiben, falls eine Telefon- oder eine Datenverbindung zu einem Kommunikationsnetz besteht.

10. Kraftwagen (10) nach Anspruch 9, wobei die Schalteinrichtung (26) dazu ausgelegt ist, bei Aktivieren einer Verriegelungseinrichtung (30) des Kraftwagens (10) durch eine Person (12) den zumindest einen vorbestimmten Verbraucher (18, 20, 22) abzuschalten.

11. Kraftwagen (10) nach Anspruch 9 oder 10, wobei die Schalteinrichtung (26) dazu ausgelegt ist, zumindest einen der folgenden
Komfortverbraucher (18, 20, 22) nach dem Abschalten der Antriebseinrichtung (24) zunächst weiterzubetreiben und erst abzuschalten, wenn das Abschaltkriterium erfüllt ist: ein
Infotainmentsystem, eine Klimaanlage (20), eine Sitzheizung (22), eine Sitzlüftung, eine Sitzmassage, ein Gebläse einer Passagierraumlüftung.

## Claims

1. A method relating to the switching off of a drive unit (24) of a motor vehicle (10), which drive unit is formed by an internal combustion engine and/or an electric motor, by a control unit (26) in case a driver (12) of the motor vehicle (10) leaves the latter with the drive unit (24) switched on, wherein a detection device (28) monitors whether the driver (12) leaves or has left the motor vehicle (10) and, if the detection device (28) signals that the driver (12) leaves or has left the motor vehicle (10), the drive unit (24) is switched off by the control unit (26), and after the switching off (S14), at least one predetermined electric load (18, 20, 22) that was in operation at the time of the switching off continues to operate and is switched off (S20) only if the load (18, 20, 22) receives an additional switch-off signal,
**characterised in that**
the at least one predetermined load is a telephone system (18) and **in that** a communication device checks whether a telephone connection with a communication network of a mobile phone provider exists during the switching off of the drive unit (24), and the communication device transmits a switch-off signal to the telephone system (18), if such a connection is detected.

2. The method as claimed in claim 1, wherein at least one comfort load (18, 20, 22) continues to operate, through which a function that can also be used by passengers (14) is provided in the motor vehicle (10).

3. The method as claimed in claim 1 or 2, wherein the switch-off signal is generated by a control device, through which also a lock system (30) for locking a vehicle door is controlled.

4. The method as claimed in any one of the preceding claims, wherein during the switching off of the drive unit (24), a timer is started and the switch-off signal is generated upon expiration of the timer.

5. The method as claimed in any one of the preceding claims, wherein during the switching off of the drive unit (24), a measuring unit is started, by means of which an amount of electric energy that is consumed by the at least one load (18, 20, 22) that continues to operate or is drawn from an energy storage system of the motor vehicle (10) is measured, and the switch-off signal is generated upon reaching a predetermined maximum value for the measured energy.

6. The method as claimed in any one of the preceding claims, wherein the detection unit (28) monitors whether after the switching off (S14) of the drive unit (24) further persons (14) still remain in the motor vehicle (10), and otherwise generates the switch-off signal.

7. The method as claimed in any one of the preceding claims, **characterised by** the following further steps:
- monitoring, by the detection device (28), whether a person (12) is present again in a predetermined monitoring region (S16);
- restarting (S12) the drive unit (24) by the control unit (26), if a presence is signalled by the detection unit (28).

8. The method as claimed in any one of the preceding claims, wherein after the switching off (S14) of the drive unit (24), the switching on of at least one predetermined electric load is blocked.

9. A motor vehicle (10) having a drive unit (24) formed by an internal combustion engine and/or an electric motor, a control unit (26) for switching off the drive unit (24), a detection unit (28) for monitoring the presence of a person (12) in the motor vehicle (10) and a control unit (26) for switching off at least one predetermined electric load (18, 20, 22), wherein the control unit (26) is designed to switch off the drive unit 24), if the detection unit (28) signals that the person (12) leaves or has left the motor vehicle (10), and wherein the control unit (26) is designed to initially continue to operate, after the switching off of the drive unit (24), the at least one predetermined load (18, 20, 22), if it was in operation at the time of switching off, and to switch it off only if a predetermined additional switch-off criterion is met, **characterised in that**
the at least one predetermined load is a telephone system (18) and/or a WLAN communication unit and **in that** the control unit (26) is designed to initially continue to operate the telephone system (16, 18) and/or the WLAN communication unit after the switching off of the drive unit (24), if a telephone or data connection with a communication network exists.

10. The motor vehicle (10) as claimed in claim 9, wherein the control unit (26) is designed to switch off, upon activation of a locking unit (30) of the motor vehicle (10) by a person (12), the at least one predetermined load (18, 20, 22).

11. The motor vehicle (10) as claimed in claim 9 or 10, wherein the control unit (26) is designed to initially continue to operate at least one of the following comfort loads (10, 20, 22) after the switching off of the drive unit (24) and to switch it off only if the switch-off criterion is met: an infotainment system, an air-conditioning system (20), a seat heating (22), a seat ventilation, a seat massage unit, a fan of a passenger space ventilation.

## Revendications

1. Procédé concernant la déconnexion d'un dispositif d'entraînement (24) d'un véhicule automobile (10) formé d'un moteur à combustion interne et/ou d'un moteur électrique par un dispositif de commande (26) dans le cas où un conducteur (12) du véhicule automobile (10) quitte celui-ci alors que le dispositif d'entraînement (24) est en marche, dans lequel on surveille par un dispositif de reconnaissance (28) si le conducteur (12) quitte ou a quitté le véhicule automobile (10) et, au cas où le dispositif de reconnaissance (28) signale que le conducteur (12) quitte ou a quitté le véhicule automobile (10), le dispositif d'entraînement (24) est déconnecté par le dispositif de commande (26) et, après la déconnexion (S14), au moins un récepteur électrique prédéterminé (18, 20, 22), qui était en marche au moment de la déconnexion, est relancé et n'est déconnecté (S20) qu'au cas où le récepteur (18, 20, 22) reçoit un signal de déconnexion supplémentaire,
**caractérisé en ce qu'**au moins un récepteur prédéterminé est une installation téléphonique (18) et l'on teste par un dispositif de communication si, au cours de la déconnexion du dispositif d'entraînement (24), il y a une liaison téléphonique avec un réseau de communication d'un fournisseur de téléphonie mobile et le dispositif de communication envoie un signal de déconnexion à l'installation téléphonique (18) au cas où aucune liaison de ce type n'est reconnue.

2. Procédé selon la revendication 1, dans lequel au moins un récepteur de confort (18, 20, 22) est relancé, par lequel une fonctionnalité utilisable également par les passagers (14) est mise à disposition dans le véhicule automobile (10).

3. Procédé selon la revendication 1 ou 2, dans lequel le signal de déconnexion est produit par un appareil de commande par lequel une installation de fermeture (30) est également commandée pour fermer une porte du véhicule.

4. Procédé selon l'une quelconque des revendications précédentes, dans lequel, lors de la déconnexion du dispositif d'entraînement (24), on démarre une minuterie et le signal de déconnexion est produit à l'expiration de la minuterie.

5. Procédé selon l'une quelconque des revendications précédentes, dans lequel, à la déconnexion du dispositif d'entraînement (24), on démarre un dispositif de mesure par lequel on mesure une quantité d'énergie électrique consommée par le au moins un récepteur relancé (18, 20, 22) ou retirée d'un accumulateur d'énergie du véhicule automobile (10) et le signal de déconnexion est produit lorsque l'on atteint une valeur maximale prédéterminée pour l'énergie mesurée.

6. Procédé selon l'une quelconque des revendications précédentes, dans lequel on surveille par le dispositif de reconnaissance (28) si, après la déconnexion (S14) du dispositif d'entraînement (24), d'autres personnes (14) sont restées dans le véhicule automobile (10) et, dans le cas contraire, le signal de déconnexion est produit.

7. Procédé selon l'une quelconque des revendications précédentes, **caractérisé par** les autres étapes consistant à :
- surveiller par le dispositif de reconnaissance (28) si à nouveau une personne (12) est présente (S16) dans une zone de surveillance prédéterminée ;
- relancer (S12) le dispositif d'entraînement (24) par le dispositif de commande (26) par signalisation d'une présence par le dispositif de reconnaissance (28).

8. Procédé selon l'une quelconque des revendications précédentes, dans lequel, après la déconnexion (S14) du dispositif d'entraînement (24), la connexion au moins d'un récepteur électrique prédéterminé est bloquée.

9. Véhicule automobile (10) comprenant un dispositif d'entraînement (24) formé d'un moteur à combustion interne et/ou d'un moteur électrique, un dispositif de commande (26) pour déconnecter le dispositif d'entraînement (24), un dispositif de reconnaissance (28) pour surveiller la présence d'une personne (12) dans le véhicule automobile (10) et un dispositif de connexion (26) pour déconnecter au moins un récepteur électrique prédéterminé (18, 20, 22), dans lequel le dispositif de commande (26) est conçu pour déconnecter le dispositif d'entraînement (24) au cas où le dispositif de reconnaissance (28) signale que la personne (12) quitte ou a quitté le véhicule automobile (10) et le dispositif de connexion (26) est conçu pour, après la déconnexion du dispositif d'entraînement (24), relancer le au moins un récepteur prédéterminé (18, 20, 22) tout d'abord au cas où il était en marche au moment de la déconnexion et ne le déconnecter qu'au cas où un critère de déconnexion prédéterminé supplémentaire est satisfait,
**caractérisé en ce que** le au moins un récepteur prédéterminé est une installation téléphonique (18) et/ou un dispositif de communication WLAN et le dispositif de connexion (26) est conçu pour relancer tout d'abord l'installation téléphonique (16, 18) et/ou le dispositif de communication WLAN après déconnexion du dispositif d'entraînement (24) au cas où il y a une liaison de téléphone ou de données avec un réseau de communication.

10. Véhicule automobile (10) selon la revendication 9, dans lequel le dispositif de connexion (26) est conçu pour, lors de l'activation d'un dispositif de verrouillage (30) du véhicule automobile (10) par une personne (12), déconnecter le au moins un récepteur prédéterminé (18, 20, 22).

11. Véhicule automobile (10) selon la revendication 9 ou 10, dans lequel le dispositif de connexion (26) est conçu pour relancer tout d'abord au moins l'un des récepteurs de confort suivants (18, 20, 22) après la déconnexion du dispositif d'entraînement (24) et de ne le déconnecter que si le critère de déconnexion est satisfait : un système d'info-éducation, une installation de climatisation (20), un chauffage de siège (22), une aération de siège, un massage de siège, une soufflerie d'une aération de l'espace passagers.
